(19) Europäisches Patentamt
European Patent Office
Office européen des brevets

(11) **EP 4 631 663 A1**

(12) **EUROPEAN PATENT APPLICATION**
published in accordance with Art. 153(4) EPC

(43) Date of publication:
**15.10.2025 Bulletin 2025/42**

(21) Application number: **24763944.6**

(22) Date of filing: **27.02.2024**

(51) International Patent Classification (IPC):
**B23K 11/24** (2006.01)     **B23K 11/11** (2006.01)
**B23K 11/25** (2006.01)     **B23K 31/00** (2006.01)

(52) Cooperative Patent Classification (CPC):
**B23K 11/11; B23K 11/24; B23K 11/25; B23K 31/00**

(86) International application number:
**PCT/JP2024/007157**

(87) International publication number:
**WO 2024/181465 (06.09.2024 Gazette 2024/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.02.2023 JP 2023030544**

(71) Applicant: **JFE Steel Corporation**
**Tokyo 100-0011 (JP)**

(72) Inventors:
• **UMEDA, Yuki**
**Tokyo 100-0011 (JP)**
• **TANIGUCHI, Koichi**
**Tokyo 100-0011 (JP)**
• **MUNEMURA, Naoaki**
**Tokyo 100-0011 (JP)**
• **KAWABE, Nao**
**Tokyo 100-0011 (JP)**

(74) Representative: **Hoffmann Eitle**
**Patent- und Rechtsanwälte PartmbB**
**Arabellastraße 30**
**81925 München (DE)**

(54) **METHOD FOR PREDICTING PROPERTY OF WELDED PORTION, METHOD FOR GENERATING PREDICTIVE MODEL, AND PREDICTIVE MODEL**

(57)     A welded portion characteristic prediction method is a method of predicting characteristics of a welded portion (5) obtained by resistance spot welding to pass a current between two electrodes (3, 4) clamping a sheet combination of three or more overlapping metal sheets, the method including acquiring electrical information outputted during resistance spot welding, inputting the electrical information to a first prediction model (221) for predicting characteristics of a first welded portion (51) and acquiring a prediction result of the characteristics of the first welded portion (51) outputted from the first prediction model (221), and inputting the electrical information to a second prediction model (222) for predicting characteristics of a second welded portion (52) and acquiring a prediction result of the characteristics of the second welded portion (52) outputted from the second prediction model (222).

*FIG. 3*

## Description

TECHNICAL FIELD

The present disclosure relates to a method of predicting the characteristics of a welded portion obtained by resistance spot welding, a method of generating a prediction model for the characteristics of a welded portion, and a prediction model for the characteristics of a welded portion.

BACKGROUND

Resistance spot welding is used to assemble the automotive body of automobiles and the like. Resistance spot welding is performed at thousands of locations on a single automotive body. Resistance spot welding is a welding method in which two or more steel sheets are overlapped and clamped between a pair of upper and lower welding electrodes, with current being passed between the welding electrodes while pressure is applied, thereby forming a nugget of a predetermined size between the steel sheets to obtain a welded joint. The grain boundary strength of the welded portion yielded by resistance spot welding depends on the nugget diameter. In welding that requires high grain boundary strength, such as welding of automotive parts, it is important to form a nugget of a predetermined diameter or greater between the steel sheets. A method of producing a spot welded joint with a nugget diameter of the required size is known (see, for example, Patent Literature (PTL) 1).

CITATION LIST

Patent Literature

PTL 1: JP 2005-262259 A

SUMMARY

(Technical Problem)

To select a set of conditions for resistance spot welding that can produce a spot welded joint with a nugget diameter of the required size, operations are carried out to measure the nugget diameter by observing a cross-section of a welded joint obtained by performing an experiment to weld steel sheets under various conditions. The greater the number of conditions under which the experiment is performed, the greater the number of welded joints subjected to nugget diameter measurement. Much time is spent in the process of measuring the nugget diameter of the welded joints, which reduces the efficiency of the operation to select the set of conditions for resistance spot welding. In particular, it is known to be difficult to form a nugget between the thinnest and thickest metal sheets in a sheet combination in which three or more metal sheets are overlapped and which has a sheet thickness ratio of 5 or more, the sheet thickness ratio being obtained by dividing the total sheet thickness of the sheet combination by the sheet thickness of the thinnest metal sheet among the metal sheets. PTL 1 discloses a welding method that stabilizes nugget formation by using multiple stages of current passage and pressurization, but the increase in welding parameters reduces the efficiency of the operation to select welding conditions. Therefore, an even greater demand exists for an increase in the efficiency of the operation to select the set of conditions for resistance spot welding for a sheet combination having three or more overlapping metal sheets and a sheet thickness ratio of 5 or more.

In view of the above facts, it is an aim of the present disclosure to provide a welded portion characteristic prediction method, a prediction model generation method, and a prediction model that can efficiently select the set of conditions for resistance spot welding.

(Solution to Problem)

To achieve the aforementioned aim, a method of determining the welding conditions of resistance spot welding according to the present disclosure is as follows.

[1] A welded portion characteristic prediction method of predicting characteristics of a welded portion of a sheet combination of three or more overlapping metal sheets including at least a first metal sheet, a second metal sheet, and a third metal sheet, the welded portion being obtained by resistance spot welding to pass a current between two electrodes clamping the sheet combination of three or more overlapping metal sheets, the method comprising:

acquiring electrical information outputted during resistance spot welding, the electrical information including at least one of the current flowing between the two electrodes, a voltage between the two electrodes, a resistance between the two electrodes, and an amount of heat generated between the two electrodes during the resistance spot welding;

inputting the electrical information to a first prediction model for predicting characteristics of a first welded portion between the first metal sheet and the second metal sheet and acquiring a prediction result of the characteristics of the first welded portion outputted from the first prediction model; and

inputting the electrical information to a second prediction model for predicting characteristics of a second welded portion between the second metal sheet and the third metal sheet and acquiring a prediction result of the characteristics of the second welded portion outputted from the second prediction model.

[2] The welded portion characteristic prediction method according to [1], wherein a sheet thickness ratio obtained by dividing a total sheet thickness of the sheet combination by a sheet thickness of a thinnest metal sheet in the sheet combination is 5 or more, and
the first metal sheet is thinner than the second metal sheet.

[3] The welded portion characteristic prediction method according to [2], wherein the first prediction model is a nonlinear model.

[4] The welded portion characteristic prediction method according to any one of [1] to [3], further comprising generating the first prediction model and the second prediction model by performing learning using the electrical information as learning data.

[5] The welded portion characteristic prediction method according to any one of [1] to [4], further comprising acquiring a prediction result of at least one of a nugget diameter, a tensile shear strength, a cross tensile strength, and a fracture strength by mechanical peel test of the welded portion as the characteristics of the welded portion.

[6] The welded portion characteristic prediction method according to any one of [1] to [5], wherein the acquiring of the electrical information includes acquiring a total amount of heat generated from a start of current passage to an end of current passage in resistance spot welding as the electrical information.

[7] The welded portion characteristic prediction method according to [6], wherein the acquiring of the electrical information includes acquiring a resistance between the two electrodes at the end of current passage as the electrical information.

[8] The welded portion characteristic prediction method according to [6] or [7], wherein the resistance spot welding includes a first stage of passing a first current and a second stage of passing a second current, and
the acquiring of the electrical information outputted during the resistance spot welding includes acquiring an amount of heat generated during the first stage within a period from the start of current passage to the end of current passage as the electrical information.

[9] A prediction model generation method of generating a model to predict characteristics of welded portions obtained by resistance spot welding to pass a current between two electrodes clamping three or more overlapping metal sheets including at least a first metal sheet, a second metal sheet, and a third metal sheet, the welded portions including a first welded portion between the first metal sheet and the second metal sheet and a second welded portion between the second metal sheet and the third metal sheet, the method comprising:

acquiring electrical information outputted during resistance spot welding, the electrical information including at least one of the current flowing between the two electrodes, a voltage between the two electrodes, a resistance between the two electrodes, and an amount of heat generated between the two electrodes during the resistance spot welding;
acquiring an analysis result of characteristics of the welded portions when the resistance spot welding is performed;
generating a first prediction model to predict characteristics of the first welded portion and a second prediction model to predict characteristics of the second welded portion by performing machine learning based on learning data associating the electrical information with the analysis result of the characteristics of the welded portions when the resistance spot welding is performed; and
generating a prediction model including the first prediction model and the second prediction model.

[10] A prediction model to predict characteristics of a welded portion, the prediction model being generated by the prediction model generation method according to [9].

(Advantageous Effect)

According to the present disclosure, a welded portion characteristic prediction method, a prediction model generation method, and a prediction model that can efficiently select the set of conditions for resistance spot welding are provided.

BRIEF DESCRIPTION OF THE DRAWINGS

In the accompanying drawings:

FIG. 1 is a schematic diagram illustrating an overview of resistance spot welding;
FIG. 2 is a block diagram illustrating an example configuration of a prediction system according to the present disclosure;
FIG. 3 is a block diagram illustrating an example configuration of a prediction model;
FIG. 4A is a graph illustrating an example of the change over time in the resistance between electrodes in resistance spot welding;
FIG. 4B is a graph illustrating an example of the change over time in the cumulative amount of heat generated during resistance spot welding;
FIG. 5 is a graph illustrating an example of a correlation between the total amount of heat generated and nugget diameter;
FIG. 6 is a graph illustrating an example of a correlation between the initial amount of heat generated and nugget diameter;

FIG. 7 is a graph illustrating an example of a pattern in which the current passed between electrodes is divided into two stages;

FIG. 8A is a cross-sectional view illustrating an example of a welded portion when current in a first stage is passed in a sheet combination of three overlapping metal sheets;

FIG. 8B is a cross-sectional view illustrating an example of a welded portion when current in a second stage is passed in a sheet combination of three overlapping metal sheets;

FIG. 9 is a flowchart illustrating an example of procedures in a prediction model generation method; and

FIG. 10 is a flowchart illustrating an example of procedures in a welded portion characteristic prediction method.

DETAILED DESCRIPTION

Embodiments of the welded portion characteristic prediction method, the prediction model generation method, and the prediction model according to the present disclosure are described below based on the drawings. Each drawing is schematic and may differ from reality. The following embodiments are examples of apparatuses or methods for embodying the technical ideas of the present disclosure, and the configurations are not specific to those listed below. In other words, various changes can be made to the technical concepts of the present disclosure within the technical scope of matter recited in the claims.

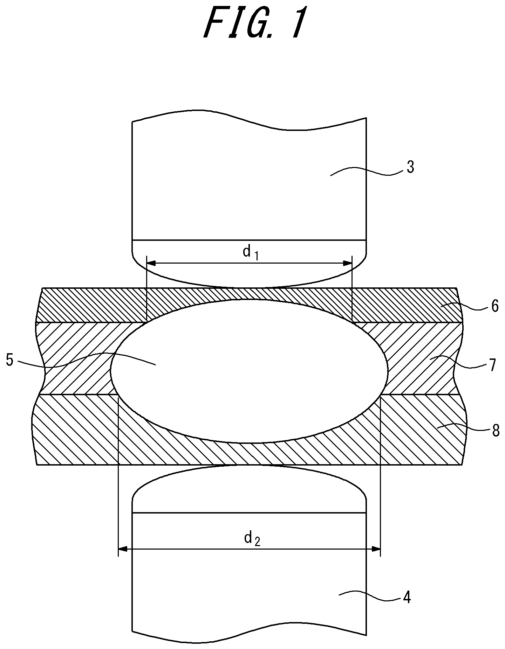

By execution of the welded portion characteristic prediction method according to the present disclosure, the characteristics of a welded portion obtained by resistance spot welding are predicted. The resistance spot welding performed to obtain the welded portion, which is the object of prediction in the method according to the present disclosure, is a method of joining a sheet combination of an upper steel sheet 6, a middle steel sheet 7, and a lower steel sheet 8, which overlap, by clamping the sheet combination between a pair of electrodes 3 and 4 and passing current between the electrodes 3 and 4 while applying pressure, as illustrated in FIG. 1. The upper steel sheet 6 is also referred to as the first metal sheet. The middle steel sheet 7 is also referred to as the second metal sheet. The lower steel sheet 8 is also referred to as the third metal sheet. In the sheet combination illustrated in FIG. 1, the upper steel sheet 6 and the middle steel sheet 7 are in contact with each other, and the middle steel sheet 7 and the lower steel sheet 8 are in contact with each other. By passage of the current through the sheet combination between the electrodes 3 and 4, the temperature of the sheet combination rises due to the heat generated by the respective electrical resistances of the upper steel sheet 6, the middle steel sheet 7, and the lower steel sheet 8, and due to the heat generated by the contact resistance between the upper steel sheet 6 and the middle steel sheet 7, and the contact resistance between the middle steel sheet 7 and the lower steel sheet 8. The high-temperature portion of the sheet combination melts during current passage between the electrodes 3 and 4 and solidifies after the end of current passage, thereby forming a welded portion 5 that joins the upper steel sheet 6, the middle steel sheet 7, and the lower steel sheet 8 that form the sheet combination. The welded portion 5 may become disk-shaped with a line connecting the electrodes 3 and 4 as the axis of rotation. The welded portion 5 is also referred to as a "nugget".

The grain boundary strength of the welded portion 5 obtained by performing resistance spot welding is determined by the area over which the welded portion 5 joins the upper steel sheet 6 and the middle steel sheet 7 and the area over which the welded portion 5 joins the middle steel sheet 7 and the lower steel sheet 8. In other words, the grain boundary strength of the welded portion 5 is determined by the extent to which the welded portion 5 extends in plan view of the steel sheets forming the sheet combination. The extent to which the welded portion 5 extends in plan view of the metal sheets forming the sheet combination may be expressed as the diameter of the disk-shaped welded portion 5. The diameter of the disk-shaped welded portion 5 is also referred to as the nugget diameter. The nugget diameter of the welded portion 5 is measured separately as a nugget diameter d1 at the contact surface between the upper steel sheet 6 and the middle steel sheet 7, and a nugget diameter d2 at the contact surface between the middle steel sheet 7 and the lower steel sheet 8, as illustrated in FIG. 1. In a case in which the welded portion 5 is formed as a disk with a normal to each steel sheet forming the sheet combination as the axis of rotation, the nugget diameters d1 and d2 are measured in a cross-section of the sheet combination taken so as to pass through the axis of rotation. In a case in which high grain boundary strength is required, such as in automotive parts, it is important that the welded portion 5 be formed so that the nugget diameter is a predetermined diameter or more.

The welded portion 5 is located inside the sheet combination that includes the upper steel sheet 6, the middle steel sheet 7, and the lower steel sheet 8. To confirm that the nugget diameter of the welded portion 5 is a predetermined diameter or more, it is necessary to conduct a test in which the sheet combination is actually welded, take a sample from the welded joint obtained in the test, and measure the nugget diameter by cross-sectional observation. To determine welding conditions such that the nugget diameter of the welded portion 5 becomes a predetermined diameter or more, it is necessary to repeat testing and cross-sectional observation while changing the welding conditions. However, cross-sectional observation involves significant labor and cost.

The grain boundary strength of the welded portion 5 is expressed as the tensile shear strength or cross tensile strength of the welded portion 5. In a case in which high grain boundary strength is required, such as in automotive parts, it is important that the welded portion 5 be formed so that the tensile shear strength or cross tensile strength of the welded portion 5 is increased. To confirm the tensile shear strength or cross tensile strength of the welded portion 5, it is necessary to conduct a test in which the sheet combination is actually welded, and a fracture test in which a load is applied to the welded joint obtained in the test. To determine welding conditions such that the grain boundary strength of the welded portion 5 becomes the required strength, it is necessary to repeat the welding test and fracture test while changing the welding conditions. However, fracture tests involve significant labor and cost.

Therefore, to reduce the labor and cost for determining the welding conditions and to increase the efficiency of selecting welding conditions, it is necessary to predict the nugget diameter of the welded portion 5 without cross-sectional observation and to predict the strength of the welded portion 5 without performing a fracture test. According to the welded portion characteristic prediction method of the present disclosure, the characteristics of the welded portion 5, including the nugget diameter, strength, or the like of welded portion 5, are predicted without performing cross-sectional observation or a fracture test on the welded joint obtained in a test. As a result, the selection of welding conditions becomes more efficient.

(Configuration example of prediction system 100)

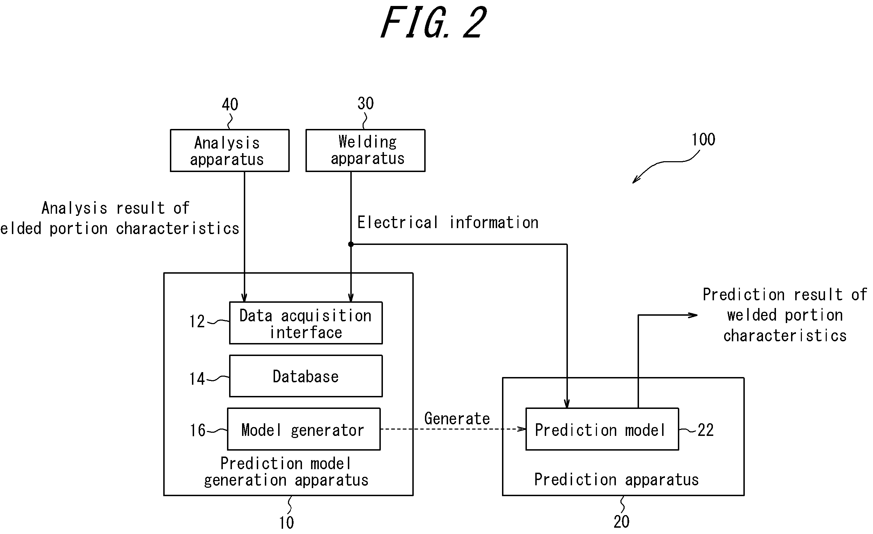

As illustrated in FIG. 2, a prediction system 100 according to one embodiment of the present disclosure includes a prediction model generation apparatus 10, a prediction apparatus 20, a welding apparatus 30, and an analysis apparatus 40.

The welding apparatus 30 performs resistance spot welding to join steel sheets together by clamping a sheet combination of three or more overlapping metal sheets, such as the upper steel sheet 6, the middle steel sheet 7, and the lower steel sheet 8 in FIG. 1, between two electrodes 3 and 4 (see FIG. 1) and passing current between the electrodes 3 and 4 while applying pressure. The welding apparatus 30 is configured to allow control of each of the electrode force and the welding current between the electrodes during welding. The welding apparatus 30 may be of various types, such as a stationary apparatus or robot gun. The power source for the welding apparatus can be either DC or AC power. In a case in which the power source is an AC power source, the calculation is ignored at the point where V = 0 so that the resistance does not become infinite, or a moving average is acquired to prevent the resistance from becoming zero. The electrodes 3 and 4 of the welding apparatus 30 may be shaped with curved tips as illustrated in FIG. 1, but this example is not limiting, and the electrodes 3 and 4 may have various other shapes. The welding apparatus 30 outputs electrical information during resistance spot welding. The electrical information outputted from the welding apparatus 30 during resistance spot welding includes at least one of the current flowing between the two electrodes while resistance spot welding is performed, the voltage between the two electrodes while resistance spot welding is performed, the resistance between the two electrodes while resistance spot welding is performed, and the amount of heat generated between the two electrodes while resistance spot welding is performed. The electrical information outputted during resistance spot welding is hereinafter also referred to as the electrical information during resistance spot welding.

The sheet combination is formed by three or more steel sheets in overlap. The operation to confirm the state of welding by analysis is particularly labor intensive in the case of selecting welding conditions for a sheet combination in which one or more of the three or more steel sheets forming the sheet combination is a high tensile strength steel sheet that is 590 MPa grade or higher, and which has a sheet thickness ratio of 5 or more, the sheet thickness ratio being obtained by dividing the total sheet thickness of the sheet combination by the sheet thickness of the thinnest metal sheet. Therefore, by use of the method of the present disclosure to select the welding conditions for a sheet combination that includes a high tensile strength steel sheet and has a sheet thickness ratio of 5 or more, the present disclosure achieves a more significant effect of improving the efficiency of operations to select the welding conditions. The number of steel sheets forming the sheet combination is not limited to the three, as illustrated in FIG. 1, but may be four or more. The sheet combination is not limited to steel sheets and may be formed by other types of metal sheets in overlap. At least one of the metal sheets forming the sheet combination may be a steel sheet with a coated or plated layer. Two or more metal sheets may be steel sheets with a coated or plated layer. The steel sheets with a coated or plated layer may have the coated or plated layer on only one side or have the coated or plated layer on both sides. The steel sheet with a coated or plated layer may, for example, be a zinc or zinc alloy coated steel sheet.

The analysis apparatus 40 analyzes the characteristics of the welded portion of the sheet combination, the welded portion being obtained after performing resistance spot welding with the welding apparatus 30, and outputs the analysis results of the welded portion characteristics. The analysis apparatus 40 may include a cross-sectional observation apparatus or a non-destructive inspection device that measures the nugget diameter of the welded portion. The analysis apparatus 40 may include a fracture test apparatus to measure the grain boundary strength of the welded portion. The welded portion characteristics include at least one of the nugget diameter, tensile shear strength, and cross tensile strength of the welded portion.

The prediction model generation apparatus 10 includes a data acquisition interface 12, a database 14, and a model generator 16. The data acquisition interface 12 acquires, from the welding apparatus 30, the electrical information during resistance spot welding in a test in which resistance spot welding is actually performed on a sheet combination of two or more overlapping metal sheets to weld the sheet combination. The data acquisition interface 12 acquires, from the analysis apparatus 40, the analysis result of the welded portion characteristics of a sample of the welded joint obtained in the welding test. The data acquisition interface 12 stores data, in the database 14, that associates the electrical information during resistance spot welding in the welding test with the analysis result of the welded portion characteristics of the sample of the welded joint obtained in the welding test. The model generator 16 performs learning using the data stored in the database 14 as learning data. The model generator 16 generates a model to predict the welded portion characteristics by performing learning. The model to predict the welded portion characteristics is configured so that upon input of electrical information during resistance spot welding, the model outputs a prediction result for the welded portion characteristics when resistance spot welding is performed with that electrical information. The model generator 16 outputs the generated model to the prediction apparatus 20.

The prediction apparatus 20 uses the prediction model acquired from the prediction model generation apparatus 10 as a prediction model 22. The prediction apparatus 20 acquires the electrical information during resistance spot welding when a welding test is performed by the welding apparatus 30 and inputs the electrical information to the prediction model 22. The prediction apparatus 20 acquires the prediction result of the welded portion characteristics outputted from the prediction model 22 and outputs the prediction result to an external destination.

The prediction model generation apparatus 10, the prediction apparatus 20, the welding apparatus 30, and the analysis apparatus 40 are communicably connected to each other. The prediction model generation apparatus 10, the prediction apparatus 20, the welding apparatus 30, or the analysis apparatus 40 may be provided with a communication interface based on a wired or wireless communication standard. Wireless communication standards may, for example, include cellular phone communication standards such as 3G, 4G, or 5G. Wireless communication standards may, for example, include IEEE 802.11 or Bluetooth® (Bluetooth is a registered trademark in Japan, other countries, or both). The communication interface may support one or more of these communication standards. The communication interface is not limited to these examples and may communicate with other apparatuses and input or output data based on various standards. The prediction model generation apparatus 10, the prediction apparatus 20, the welding apparatus 30, or the analysis apparatus 40 may be connected via a network or directly (for example, by peer-to-peer (P2P)).

The prediction apparatus 20 may be communicably connected to an external apparatus to transmit the prediction result of the welded portion characteristics to the external apparatus. The prediction apparatus 20 may include an output device that outputs the prediction result of the welded portion characteristics. As the output device, the prediction apparatus 20 may include a display device for the prediction result of the welded portion characteristics. The display device may, for example, be configured to include a Liquid Crystal Display (LCD), an organic Electro-Luminescence (EL) display, an inorganic EL display, a Plasma Display Panel (PDP), or the like. The display device is not limited to these displays and may be configured to include displays based on various other methods.

The prediction model generation apparatus 10 or the prediction apparatus 20 may be configured to include at least one processor, such as a CPU (Central Processing Unit) or GPU (Graphics Processing Unit). The prediction model generation apparatus 10 or the prediction apparatus 20 may be configured by a single processor or a plurality of processors. The processor configuring the prediction model generation apparatus 10 or the prediction apparatus 20 may realize the functions of the prediction model generation apparatus 10 and the prediction apparatus 20 by reading and executing programs stored in the memory described below.

The prediction model generation apparatus 10 or the prediction apparatus 20 may include a memory. The memory stores various information, data, and the like. The memory may, for example, store programs executed by the prediction model generation apparatus 10 or the prediction apparatus 20, or data used in the processing executed by the prediction model generation apparatus 10 or the prediction apparatus 20, the results of processing, and the like. The memory may also function as a working memory of the prediction model generation apparatus 10 or the prediction apparatus 20. The memory may include, but is not limited to, a semiconductor memory, for example. The memory may, for example, be configured as the internal memory of the processor used as the prediction model generation apparatus 10 or the prediction apparatus 20 or as a hard disk drive (HDD) accessible from the prediction model generation apparatus 10 or the prediction apparatus 20. The memory may be configured as a non-transitory readable medium. The memory may be configured integrally with the prediction model generation apparatus 10 or the prediction apparatus 20 or may be configured separately from the prediction model generation apparatus 10 or the prediction apparatus 20.

The prediction system 100 does not need to include the prediction model generation apparatus 10. In a case in which the prediction system 100 does not include the prediction model generation apparatus 10, the prediction apparatus 20 acquires the prediction model 22 from an external apparatus. The prediction system 100 does not need to include the welding apparatus 30. In a case in which the prediction system 100 does not include the welding apparatus 30, the prediction model generation apparatus 10 or the prediction apparatus 20 acquires the electrical information during resistance spot welding in a welding experiment from an external apparatus that performs the welding. The prediction system 100 does not need to include the analysis apparatus 40. In a case in which the prediction system 100 does not include the analysis apparatus 40, the prediction model generation apparatus 10 acquires the analysis result of the welded portion characteristics of a sample of the welded joint obtained in a welding experiment from an external apparatus that performs the analysis.

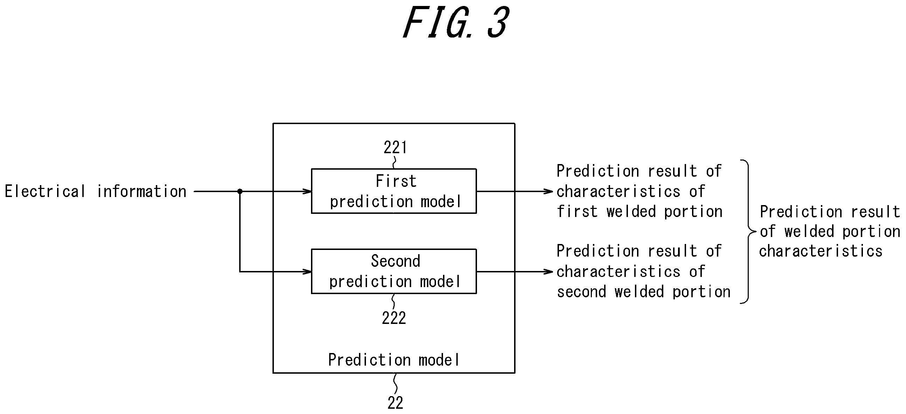

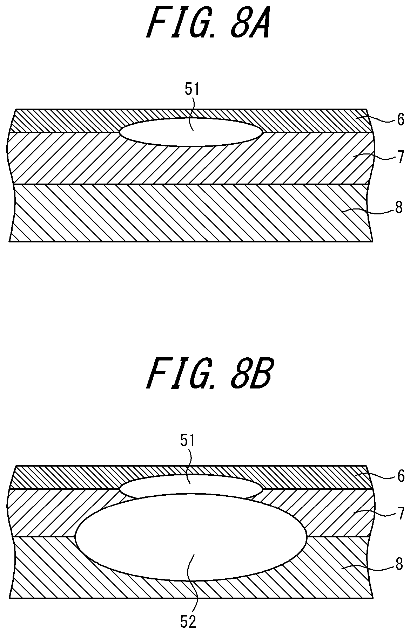

The prediction model 22 may include a first prediction model 221 and a second prediction model 222, as illustrated in FIG. 3. The first prediction model 221 is configured as a model that predicts the characteristics of the first welded portion 51 (see FIG. 8A) located between the upper steel sheet 6 and the middle steel sheet 7. The second prediction model 222 is configured as a model that predicts the characteristics of the second welded portion 52 (see FIG. 8B) located between the middle steel sheet 7 and the lower steel sheet 8. The prediction model 22 may predict the characteristics of the first welded portion 51 and the characteristics of the second welded portion 52 separately in the first prediction model 221 and the second prediction model 222, and output the respective prediction results together as the prediction result of the welded portion characteristics. The number of models forming the prediction model 22 is not limited to two, as illustrated in FIG. 3. For example, a prediction model 22 applied to a sheet combination with four overlapping steel sheets may be configured as three separate models. The number of models forming the prediction model 22 applied to a sheet combination with three or more overlapping steel sheets is not limited to the number of steel sheet minus one, but may instead be the number of steel sheets minus two or more.

(Operation example of prediction system 100)

Below, an example of the operation of the prediction system 100 is described in detail.

The data acquisition interface 12 of the prediction model generation apparatus 10 acquires, from the welding apparatus 30, the electrical information during resistance spot welding performed in a welding experiment. The data acquisition interface 12 acquires, from the analysis apparatus 40, the analysis result of the welded portion characteristics of a sample of the welded joint obtained in the welding experiment.

The data acquisition interface 12 selects, and stores in the database 14, one or more pieces of performance data from the electrical information during resistance spot welding. The performance data from the electrical information during resistance spot welding includes at least one of the current flowing between the two electrodes or the voltage applied between the two electrodes while resistance spot welding is performed, the resistance between the two electrodes while resistance spot welding is performed, and the amount of heat generated between the two electrodes while resistance spot welding is performed.

The data acquisition interface 12 selects, and stores in the database 14, one or more pieces of performance data from the analysis result of the welded portion characteristics. The performance data on the welded portion characteristics include at least one of the nugget diameter, tensile shear strength, and cross tensile strength of the welded portion 5 (see FIG. 1). The analysis result of the welded portion characteristics is information obtained from off-line testing in the analysis apparatus 40.

The data acquisition interface 12 stores, in the database 14, the performance data from the electrical information during resistance spot welding and the performance data on the welded portion characteristics in the database 14 together with additional information, such as a welding control number, so that these performance data can be associated with each other. The performance data from the electrical information during resistance spot welding and the performance data on the welded portion characteristics are associated by the additional information such as the welding control number and stored in the database 14 as one data set. Each data set accumulated in the database 14 corresponds to one welding condition in a welding experiment. The number of data sets used to generate the prediction model 22 is preferably 100 or more, more preferably 200 or more. The number of data sets is even more preferably 300 or more.

The model generator 16 uses one or more pieces of performance data selected from the electrical information during resistance spot welding among the data sets stored in the database 14 as input performance data and generates the learned prediction model 22 by performing machine learning using the input performance data. The method of machine learning performed by the model generator 16 may be a known learning method. The method of machine learning may be any method as long as the learned prediction model 22 can achieve sufficient prediction accuracy for the welded portion characteristics for practical purposes. For example, known machine learning methods based on a neural network, including deep learning, a convolutional neural network (CNN), or a recurrent neural network (RNN), may be used. Other methods may be used, such as regression tree learning, support vector regression, or Gaussian processes. Ensemble models combining multiple models may also be used. The prediction model 22 may be generated by performing machine learning and then updated as appropriate by relearning with the latest learning data.

<Performance data from electrical information during resistance spot welding>

As described above, in the prediction system 100 according to the present embodiment, one or more pieces of performance data is selected from the electrical information during resistance spot welding and used to predict the welded portion characteristics. The one or more pieces of performance data selected from the electrical information during resistance spot welding includes, for example, the welding current value I, the voltage between electrodes V, the resistance between electrodes R, or the amount of heat generated Q. The welding current value I is the current flowing between the two electrodes 3 and 4 (see FIG. 1) during the performance of resistance spot welding. The voltage between electrodes V is the voltage applied between the two electrodes 3 and 4 during the performance of resistance spot welding. The resistance between electrodes R is the electrical resistance between the two electrodes 3 and 4 and is calculated by $R = V/I$ using the voltage between electrodes V and the welding current value I. The amount of heat generated Q is the amount of heat generated between the two electrodes 3 and 4 and is calculated by $Q = (I \cdot R)^2/(r \cdot t^2)$ using the welding current value I, the resistance between electrodes R, and the resistivity r and sheet thickness t of the metal sheets forming the sheet combination. In a case in which the metal sheet is a steel sheet, the resistivity r is the specific resistance of pure iron at 1200 °C.

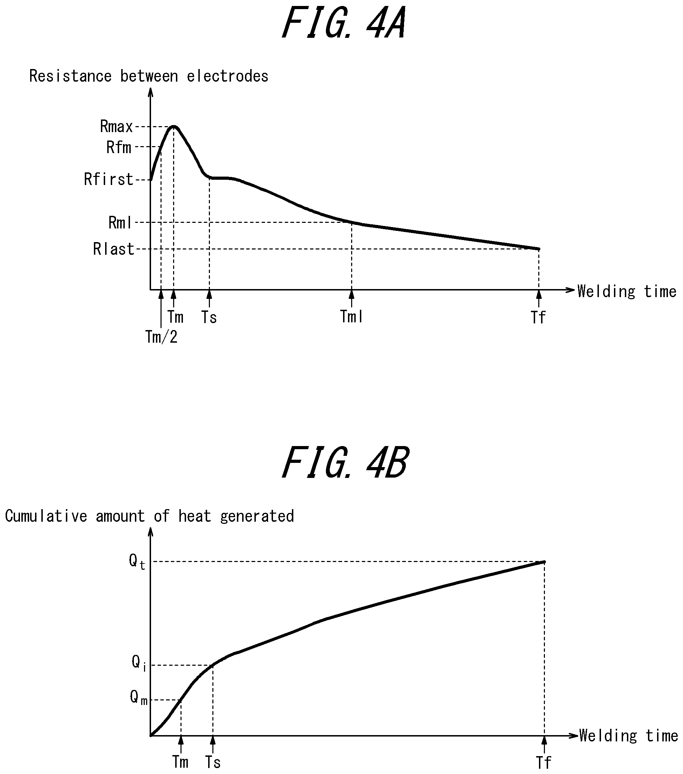

The resistance of a metal sheet changes as the metal sheet melts during the performance of resistance spot welding. As a result, the resistance between electrodes R changes over time during the performance of resistance spot welding, as illustrated in FIG. 4A. In addition, the cumulative value of the amount of heat generated increases over time during the performance of resistance spot welding, as illustrated in FIG. 4B. In the graphs in FIGS. 4A and 4B, the horizontal axis represents the welding time for resistance spot welding. The vertical axis of the graph in FIG. 4A represents the resistance between electrodes R. The vertical axis of the graph in FIG. 4B represents the cumulative amount of heat generated, which is the cumulative value of the amount of heat generated between electrodes.

The reference signs indicating specific times on the horizontal axis in FIGS. 4A and 4B are defined as follows.

Tm: Time at which the resistance between electrodes R reaches its maximum value (Rmax)
Ts: Time at which a predetermined time has elapsed from the start of current passage in resistance spot welding
Tf: Time at which current passage in resistance spot welding is finished

Tml: Time in the middle between the time (Tm) at which the resistance between electrodes R reaches its maximum value (Rmax) and the time (Tf) at which current passage is finished, calculated as Tm + (Tf - Tm)/2

The reference signs indicating specific resistances on the vertical axis in FIG. 4A are defined as follows.

Rfirst: Value of resistance between electrodes R when a predetermined time (Ts) has elapsed from the start of current passage in resistance spot welding
Rmax: Maximum value of resistance between electrodes R
Rfm: Value of resistance between electrodes R at 1/2 the time (Tm) at which the resistance between electrodes R reaches its maximum value (Rmax)
Rlast: Value of resistance between electrodes R when current passage in resistance spot welding is finished
Rml: Value of the resistance between electrodes R at the time (Tml) in the middle between the time (Tm) at which the resistance between electrodes R reaches its maximum value (Rmax) and the time (Tf) at which current passage is finished

The reference signs indicating specific amounts of heat generated on the vertical axis in FIG. 4B are defined as follows.

Qm: cumulative amount of heat generated up to the time (Tm) at which the resistance between electrodes R reaches its maximum value (Rmax)
Qi: cumulative amount of heat generated from the start of current passage in resistance spot welding until a predetermined time (Ts) has elapsed
Qt: cumulative amount of heat generated from the start of current passage in resistance spot welding until current passage is finished
Qi is also referred to as the initial amount of heat generated. Qt is also referred to as the total amount of heat generated.

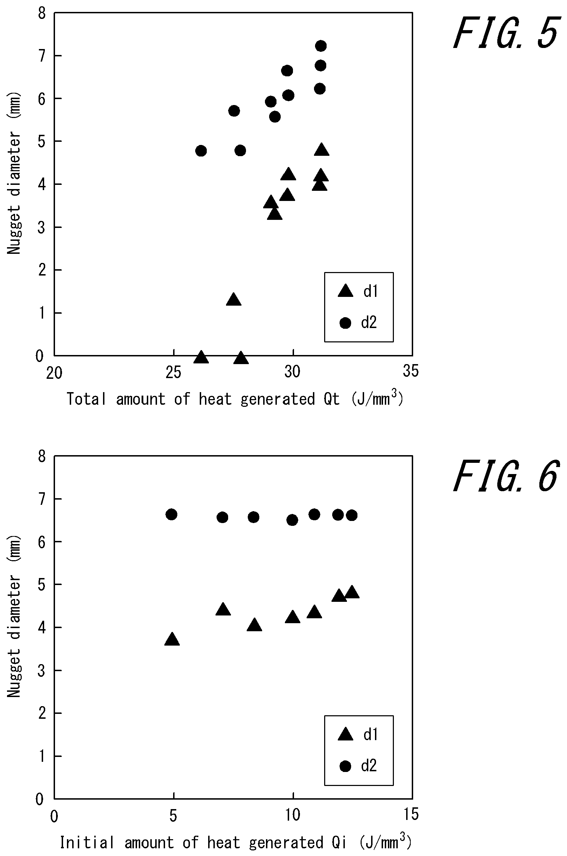

The value indicated by each of the above-described signs identifies the performance data from the electrical information during resistance spot welding. In other words, the performance data from the electrical information during resistance spot welding includes the values indicated by each of the above-described signs. Among the performance data from the electrical information during resistance spot welding, the total amount of heat generated Qt was found to have a significant effect on the welded portion characteristics. For example, as illustrated in FIG. 5, the total amount of heat generated Qt correlates with the nugget diameters d1 and d2 (see FIG. 1). The horizontal axis of the graph in FIG. 5 represents the total amount of heat generated Qt. The vertical axis represents the nugget diameter. Based on the correlation between the total amount of heat generated Qt and the nugget diameter, among the performance data from the electrical information during resistance spot welding, the total amount of heat generated Qt may be adopted as the performance data used to generate the prediction model 22 and the performance data that is inputted to the prediction model 22 to predict the welded portion characteristics.

The initial amount of heat generated Qi was also found to have a significant effect on the nugget growth process at the initial stage of current passage in resistance spot welding. In other words, among the performance data from the electrical information during resistance spot welding, the initial amount of heat generated Qi was found to have a significant effect on the welded portion characteristics. The initial amount of heat generated Qi is the amount of heat generated during a partial period from the start of current passage, within the period from the start of current passage to the end of current passage, in the resistance spot welding. The predetermined time Ts defining the initial amount of heat generated Qi may be set to 200 milliseconds (ms), for example. The initial amount of heat generated Qi may be calculated by excluding the amount of heat generated during a very short period of time in the initial stage of welding, such as 10 ms from the start of current passage in the resistance spot welding. For example, as illustrated in FIG. 6, the initial amount of heat generated Qi correlates with the nugget diameter d1 (see FIG. 1). The horizontal axis of the graph in FIG. 6 represents the initial amount of heat generated Qi. The vertical axis represents the nugget diameter. Based on the correlation between the initial amount of heat generated Qi and the nugget diameter, among the performance data from the electrical information during resistance spot welding, adoption of the total amount of heat generated Qi as the performance data used to generate the prediction model 22 and the performance data that is inputted to the prediction model 22 to predict the welded portion characteristics increases the prediction accuracy.

In addition, various values of resistance between electrodes R (Rfirst, Rfm, Rmax, Rml, Rlast, or Rmean, which is the mean value of resistance between electrodes R during the entire period from the start to the end of welding) among the performance data from the electrical information during resistance spot welding were found to have a significant effect on the welded portion characteristics. The value of the resistance between electrodes R is heavily influenced by the current passage area. The current passage area is affected by the nugget diameter. For example, the value of the resistance between electrodes R at the end of welding (Rlast) correlates with the final nugget diameter. Therefore, the value of the resistance between electrodes R at the end of welding (Rlast) may be used to predict the nugget diameter of the welded portion.

<Welded portion characteristics>

Examples of the welded portion characteristics include the nugget diameter d (see FIG. 1), the cross tensile strength, the shear tensile strength, and the fracture strength by mechanical peel test of the welded portion 5. The welded portion characteristics are measured by taking a test piece from a welded joint obtained by performing resistance spot welding on a sheet combination of two or more overlapping metal sheets. Among the welded portion characteristics, the nugget diameter may be measured by the method described in JIS Z3140 or by non-destructive testing such as ultrasonic testing or eddy current. The cross tensile strength may be measured by the method described in JIS Z3137. The shear tensile strength may be measured by the method described in JIS Z3136. The fracture strength by mechanical peel test may be measured by the method described in ISO 14270.

<Welding conditions>

The welding conditions in resistance spot welding that are subject to prediction of the welded portion characteristics in the prediction system 100 according to the present embodiment are not limited. The welding conditions may, for example, be set so that a constant current flows from the start to the end of resistance spot welding. The welding conditions may be set for two-stage welding in which the period from the start to the end of resistance spot welding is divided into a first stage and a second stage, and the welding conditions differ between the duration of the first stage and the duration of the second stage. In particular, in the case of welding a sheet combination in which three or more metal sheets are overlapped and which has a sheet thickness ratio of 5 or more, the sheet thickness ratio being obtained by dividing the total sheet thickness of the sheet combination by the sheet thickness of the thinnest metal sheet among the metal sheets, two-stage welding is preferably performed under the following set of conditions.

In the first stage of welding, the electrode force P1 (kN) is preferably set to satisfy the following Expression (1) in relation to the sheet thickness tm of the thinnest metal sheet among the plurality of metal sheets. The sheet thickness of the thinnest metal sheet corresponds to the sheet thickness (mm) of the upper steel sheet 6 in FIG. 6.

$$0.8\mathrm{tm} \leq \mathrm{P1} \leq 5\mathrm{tm} \qquad (1)$$

In a case in which the electrode force P1 in the first stage of welding is 5tm (kN) or more, the electrode force becomes too high, and the heat generated by contact resistance becomes too small to form a nugget between the upper steel sheet 6 and the middle steel sheet 7. On the other hand, in a case in which the electrode force P1 is 0.8tm or less, the contact resistance between the electrode tip and the upper steel sheet 6 is high, which promotes sparks and also promotes expulsion (splash) from between the upper steel sheet 6 and the middle steel sheet 7.

In the first stage of welding, the current passage time T1 (ms) is preferably set to satisfy the following Expression (2).

$$30 \leq T1 \leq 120 \qquad (2)$$

If the current passage time T1 is 30 ms or less, the current passage time is too short and a nugget of the desired size cannot be formed between the upper steel sheet 6 and the middle steel sheet 7. On the other hand, in a case in which the current passage time T1 is longer than 120 ms, expulsion (splash) occurs.

In the first stage of welding, the welding current I1 (kA) is preferably set to satisfy the following Expression (3) in relation to the sheet thickness tm of the thinnest metal sheet among the plurality of metal sheets. The thinnest sheet thickness corresponds to the sheet thickness (mm) of the upper steel sheet 6 in FIG. 6.

$$3tm + 5 \leq I1 \qquad (3)$$

In a case in which the welding current I1 in the first stage of welding is (3tm + 5) or less, contact resistance heat generation cannot be effectively utilized and a nugget cannot be formed between the upper steel sheet 6 and the middle steel sheet 7.

Therefore, in the first stage of welding, the electrode force P1, the welding current I1, and the current passage time T1 are preferably set to satisfy Expressions (1), (2), and (3) above in order to form a nugget of the desired size between the upper steel sheet 6 and the middle steel sheet 7.

In the second stage of welding, the electrode force P2 (kN) is preferably set to satisfy the following Expression (4) in relation to the electrode force P1 in the first stage of welding.

$$P1 \leq P2 \leq 10P1 \qquad (4)$$

The welding current I2 (kA) in the second stage is preferably set to satisfy the following Expression (5) in relation to the welding current I1 in the first stage.

$$0.5 \leq I2 \leq I1 \qquad (5)$$

The current passage time T2 (ms) in the second stage is preferably set to satisfy the following Expression (6) in relation to the current passage time T1 in the first stage of welding.

$$T1 \leq T2 \leq 10T1 \qquad (6)$$

If the set of conditions of the second stage of welding are outside the aforementioned ranges, it will be difficult to prevent expulsion (splash) or to obtain a nugget diameter of a predetermined size. An excessive increase in the electrode force causes problems such as heat marks or lifting becoming larger. In the case of performing two-stage welding, the above-described predetermined time (Ts) in the performance data from the electrical information during resistance spot welding is preferably set to the time at which the first stage finishes and the second stage begins.

In the case of selecting welding conditions to perform welding with two-stage current passage as described above, conditions can be combined in numerous ways. Therefore, by applying the prediction system 100 and the prediction method according to the present embodiment to select welding conditions for performing welding with two-stage current passage, the efficiency of operations to select the welding conditions is improved.

The amount of heat generated during the first stage of resistance spot welding may be acquired as electrical information during resistance spot welding. By use of the amount of heat generated during the first stage of resistance spot welding as the electrical information during resistance spot welding, the accuracy of predicting the welded portion characteristics improves.

The prediction system 100 and the prediction method according to the present embodiment may be applied not only to select welding conditions in the welding methods described above, but also to select welding conditions in various other welding methods. The prediction system 100 and the prediction method according to the present embodiment may, for example, be applied to select welding conditions in methods such as single-stage current passage with constant current and electrode force, multi-stage current passage in which the current or electrode force settings change partway through, or adaptive control in which the current is controlled according to a reference amount of heat. Furthermore, the prediction system 100 and the prediction method according to the present embodiment may be applied to select welding conditions in a method that includes main-current passage to form the welded portion followed by subsequent-current passage.

EXAMPLES

Specific examples are described below. In the present example, a single-phase AC resistance spot welder with servo motor pressurization is used as the welding apparatus 30. The spot welder includes a DR-type electrode made of chrome copper with a tip diameter of 6 mm and a curvature radius of 40 mm. In the present example, the welding conditions are determined for the sheet combination with three overlapping steel sheets including the upper steel sheet 6, the middle steel sheet 7, and the lower steel sheet 8, as illustrated in FIG. 1. As the upper steel sheet 6, a steel sheet with a tensile strength of 270 MPa and a sheet thickness of 0.7 mm is used. As the middle steel sheet 7 and the lower steel sheet 8, steel sheets with a tensile strength of 1470 MPa and a sheet thickness of 1.6 mm are used. In other words, the sheet combination for which the welding conditions are to be determined in the present example is configured so that the first metal sheet is thinner than the second and third metal sheets, and the sheet thickness is the same for the second and third metal sheets.

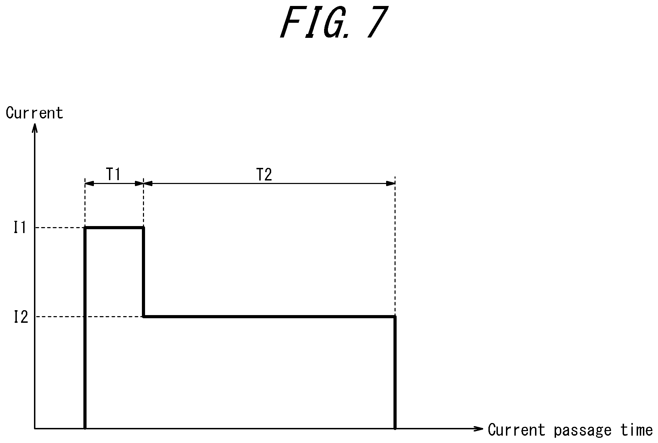

A test of the welding of the above-described sheet combination was performed by the above-described welding apparatus 30. The welding conditions for the welding test in the present example were set to two-stage current passage, with a different welding current flowing between the electrodes during the first stage, represented by time T1, and the second stage, represented by time T2, as illustrated in FIG. 7. The horizontal axis in FIG. 7 represents the current passage time for resistance spot welding. The vertical axis represents the current flowing between the electrodes. The welding current between the electrodes during the first stage is represented as I1. The welding current between the electrodes during the second stage is represented as I2.

The current passage during the first stage raises the temperature at the contact surface between the middle steel sheet 7 and the upper steel sheet 6, which is thinner than the middle steel sheet 7 and the lower steel sheet 8, earlier than at the contact surface between the middle steel sheet 7 and the lower steel sheet 8, thereby melting the steel sheets to form a first welded portion 51, as illustrated in FIG. 8A. The current passage during the second stage also raises the temperature at the contact surface between the middle steel sheet 7 and the lower steel sheet 8, thereby melting the steel sheets to form a second welded portion 52, as illustrated in FIG. 8B. The result is a single welded portion 5 joining the three steel sheets, as illustrated in FIG. 1. The nugget diameter of the welded portion 5 is measured separately as a nugget diameter d1 at the contact surface between the upper steel sheet 6 and the middle steel sheet 7, and a nugget diameter d2 at the contact surface between the middle steel sheet 7 and the lower steel sheet 8, as illustrated in FIG. 1. The nugget diameters d1 and d2 are the diameters of the welded portion 5 in plan view of each steel sheet in the sheet combination. In a case in which the welded portion 5 is formed as a disk with a normal to each steel sheet forming the sheet combination as the axis of rotation, the nugget diameters d1 and d2 are measured in a cross-section of the sheet combination taken so as to pass through the axis of rotation.

Specifically, the welding conditions were set so that the electrode force was 3 kilonewtons (kN) to 5 kN, the welding current I1 was 5 kiloamperes (kA) to 13 kA, and the current passage time T1 was 60 ms during the first stage. The welding conditions were also set so that the electrode force was 3 kN to 5 kN, the welding current I2 was 5 kA to 10 kA, and the current passage time T2 was 360 ms during the second stage.

One hundred and eighty combinations of welding conditions were established by changing each of the electrode force and welding current within the above-described ranges. Resistance spot welding was performed, on the sheet combination for which welding conditions are to be determined in the present example, by applying each of the 180 different welding conditions to create 180 welded joints.

In the present example, the nugget diameter d1 of the first welded portion 51 and the nugget diameter d2 of the second welded portion 52 were analyzed as a welded portion characteristic of the 180 welded joints. Specifically, the nugget diameters were measured by cutting the welded portion of the welded joint obtained by welding, etching the cross-section, and observing by optical microscopy. The nugget diameter d1 of the first welded portion 51 was measured as the nugget diameter d1 between the upper steel sheet 6 and the middle steel sheet 7, as illustrated in FIG. 1. The nugget diameter d2 of the second welded portion 52 was measured as the nugget diameter d2 between the middle steel sheet 7 and the lower steel sheet 8, as illustrated in FIG. 1.

The data acquisition interface 12 of the prediction model generation apparatus 10 acquires performance data from the electrical information during resistance spot welding in which each of the 180 different welding conditions were applied and performance data on the nugget diameters d1 and d2 of the 180 welded joints. The data acquisition interface 12 associates the performance data from the electrical information during resistance spot welding corresponding to each welding condition with the performance data on the nugget diameters d1 and d2 and stores the result in the database 14 of the prediction model generation apparatus 10.

The model generator 16 of the prediction model generation apparatus 10 acquires, from the database 14, the data associating the performance data from the electrical information during resistance spot welding with the performance data on the nugget diameters d1 and d2. The model generator 16 performs machine learning using the acquired data as learning data and generates the first prediction model 221 and the second prediction model 222 that, when performance data from the electrical information during resistance spot welding is inputted, respectively output a prediction result of the nugget diameter d1 of the first welded portion 51 located between the upper steel sheet 6 and the middle steel sheet 7 and a prediction result of the nugget diameter d2 of the second welded portion 52 located between the middle steel sheet 7 and the lower steel sheet 8. In other words, in the present example, a different prediction model is generated for each combination of two steel sheets in contact with each other.

In the sheet combination illustrated in FIG. 1, the sheet thickness ratio of the combination of the upper steel sheet 6 and the middle steel sheet 7 in contact with each other is about 2.3. The sheet thickness ratio of the combination of the middle steel sheet 7 and the lower steel sheet 8 in contact with each other is 1. In a case in which the sheet thickness ratio differs for each combination of two steel sheets, it was found that the prediction accuracy of the nugget diameter for each combination was improved by applying different models to each combination. The sheet thickness ratio of the combination of the upper steel sheet 6 and the middle steel sheet 7 is also referred to as the first sheet thickness ratio. The sheet thickness ratio of the combination of the middle steel sheet 7 and the lower steel sheet 8 is also referred to as the second sheet thickness ratio. Different models may be applied for each of the combinations in which the first sheet thickness ratio and second sheet thickness ratio differ from each other.

Specifically, it was found that when the sheet thicknesses of the steel sheets in contact with each other are close, i.e., when the sheet thickness ratio is close to 1, the prediction accuracy of the nugget diameter is improved by using a linear model. On the other hand, it was found that when the sheet thicknesses of the steel sheets in contact with each other differ significantly, i.e., when the sheet thickness ratio is large, the prediction accuracy of nugget diameter is improved by using a nonlinear model. Ridge regression, Elastic-Net, and the like may, for example, be used as a linear model. Neural networks, regression tree models, and the like may be used as a nonlinear model. The models applied as linear and nonlinear models are not limited to those mentioned above and may be selected as appropriate depending on the configuration of the sheet combination for which welding conditions are to be determined. In the present example, it is assumed that LightGBM, which is classified as a nonlinear model, is applied as the first prediction model 221 to predict the characteristics of the first welded portion 51 between the upper steel sheet 6 and the middle steel sheet 7, which have a large sheet thickness ratio. On the other hand, it is assumed that Ridge regression, which is classified as a linear model, is applied as the second prediction model 222 to predict the characteristics of the second welded portion 52 between the middle steel sheet 7 and the lower steel sheet 8, which have a sheet thickness ratio of 1.

The method of machine learning performed by the model generator 16 to generate the prediction model 22 may be any known learning method, regardless of whether the model is linear or nonlinear. The method of machine learning may be any method as long as the learned first prediction model 221 and second prediction model 222 can achieve sufficient prediction accuracy for the characteristics of the first welded portion 51 and the second welded portion 52 for practical purposes. In particular, there exist numerous methods that can be applied to nonlinear regression. For example, support vector regression, Gaussian processes, ensemble models combining a plurality of models, or the like may be used. The first prediction model 221 or the second prediction model 222 may be generated by performing machine learning and then updated as appropriate by relearning with the latest learning data.

Using the prediction model 22, which includes the first prediction model 221 and the second prediction model 222, generated by the prediction model generation apparatus 10 as described above, the prediction apparatus 20 can predict the nugget diameters of the welded portion of a welded joint obtained in a welding test performed by applying new welding conditions, without observing a cross-section of the welded joint. In the present example, 50 welded joints were created with 50 new welding conditions.

A comparison of the results of predicting the nugget diameters d1 and d2 of the welded portion of the 50 welded joints using the prediction model 22, which includes the first prediction model 221 to which LightGBM was applied and the second prediction model 222 to which Ridge regression was applied, with the results of actually measuring the nugget diameters d1 and d2 of the welded portion of the 50 welded joints revealed that the nugget diameter d1 between the upper steel sheet 6 and the middle steel sheet 7 was predicted with an error of ±6%. The nugget diameter d2 between the middle steel sheet 7 and the lower steel sheet 8 was predicted with an error of ±2%.

On the other hand, in the case of using a prediction model 22 in which Ridge regression was applied to the first prediction model 221, the nugget diameter d1 between the upper steel sheet 6 and the middle steel sheet 7 was predicted with an error of ±9%. In other words, the prediction accuracy of the nugget diameter d1 when LightGBM, which is classified as a nonlinear model, was applied to the first prediction model 221 is better than the prediction accuracy of the nugget diameter d1 when Ridge regression, which is classified as a linear model, was applied to the first prediction model 221.

As another example, a prediction model 22 was generated by performing learning in which the initial amount of heat generated Qi was further added to the learning data as the performance data from the electrical information during resistance spot welding. The initial amount of heat generated Qi is assumed to be the cumulative amount of heat generated from the start of current passage up to 60 ms. Using the prediction model 22 generated by adding the initial amount of heat generated Qi, the nugget diameter d1 between the upper steel sheet 6 and the middle steel sheet 7 was predicted with an error of ±7%. The nugget diameter d2 between the middle steel sheet 7 and the lower steel sheet 8 was predicted with an error of ±2%. The prediction accuracy of the nugget diameter d1 between the upper steel sheet 6 and the middle steel sheet 7 was improved by adopting the initial amount of heat generated Qi as performance data to be inputted into the prediction model 22. In other words, the prediction accuracy of the nugget diameter at the contact surface between a thin steel sheet and a thick steel sheet was improved by adopting the initial amount of heat generated Qi as performance data to be inputted into the prediction model 22.

As has been explained by the examples, according to the prediction system 100 of the present disclosure, welded portion characteristics such as nugget diameter can be predicted with high accuracy based on the performance data from the electrical information during resistance spot welding. The highly accurate prediction of nugget diameter eliminates the process of actually measuring the nugget diameter by taking a cross-section of the welded joint created by the welding test. This saves the labor and costs that would be spent in the process of taking a cross-section of the welded joint and actually measuring the nugget diameter. As a result, the welding conditions are selected efficiently by increasing the number of welding conditions set in the welding test.

When executed for a sheet combination with two or more overlapping metal sheets, the prediction system 100 and the prediction method according to the present disclosure can improve the efficiency of operations to select the welding conditions for the sheet combination with two or more overlapping metal sheets. Additionally, when executed for a sheet combination with three or more overlapping metal sheets, the prediction system 100 and the prediction method according to the present disclosure can improve the efficiency of operations to select the welding conditions for the sheet combination with three or more overlapping metal sheets. The operations to select the welding conditions for a sheet combination with three or more overlapping metal sheets are more difficult than the operations to select the welding conditions for a sheet combination with two overlapping metal sheets. Therefore, when executed for a sheet combination with three or more overlapping metal sheets, the prediction system 100 and the prediction method according to the present disclosure can achieve an even greater effect of improving the efficiency of operations to select the welding conditions.

In the above example, the sheet thickness of the upper steel sheet 6 was 0.7 mm, and the sheet thickness of the middle steel sheet 7 was 1.6 mm. In other words, the sheet thickness ratio obtained by dividing the total sheet thickness of the sheet combination by a sheet thickness of a thinnest metal sheet in the sheet combination was approximately 5.6. It is known that the larger the sheet thickness ratio of a sheet combination subjected to resistance spot welding, the harder it is to form a welded portion with the required nugget diameter at the contact surface between a thin steel sheet and a thick steel sheet. It is particularly difficult to determine welding conditions that form a welded portion with the required nugget diameter in resistance spot welding of a sheet combination whose sheet thickness ratio exceeds 5. The prediction system 100 according to the present disclosure can predict, with high accuracy, the welded portion characteristics for a sheet combination with an even larger sheet thickness ratio, or in particular, a sheet combination of overlapping steel sheets with a sheet thickness ratio of 5 or more, thereby improving the efficiency of operations to determine the welding conditions.

<Example flowchart>

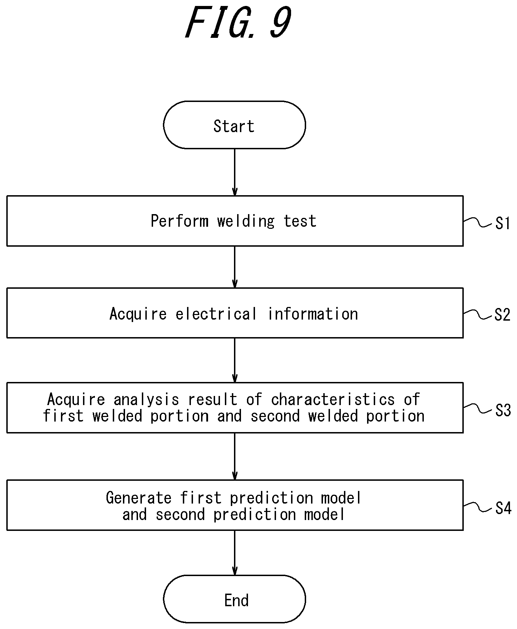

In the prediction system 100 according to the present embodiment, the prediction model 22 may be generated by executing a flowchart that includes the procedures illustrated in FIG. 9.

The welding apparatus 30 performs a welding test on a sheet combination subject to determination of the welding conditions for resistance spot welding (step S1). The welding conditions of the welding test may be set as appropriate.

The data acquisition interface 12 of the prediction model generation apparatus 10 acquires the electrical information during resistance spot welding performed by the welding apparatus 30 in the welding test (step S2). The data acquisition interface 12 of the prediction model generation apparatus 10 also acquires the analysis result of the characteristics of each of the first welded portion 51 and the second welded portion 52 from a sample of the welded joint obtained by the welding test (step S3). The analysis result of the characteristics of each of the first welded portion 51 and the second welded portion 52 is obtained by the analysis apparatus 40 performing off-line analysis of the sample of the welded joint obtained by the welding test. The data acquisition interface 12 stores data associating the electrical information during resistance spot welding with the analysis result of the welded portion characteristics in the database 14.

The model generator 16 of the prediction model generation apparatus 10 performs learning using the data stored in the database 14 as learning data to generate the first prediction model 221 to predict the characteristics of the first welded portion 51 and the second prediction model 222 to predict the characteristics of the second welded portion 52 (step S4). The prediction system 100 terminates execution of the flowchart in FIG. 9 after completion of the procedure in step S4.

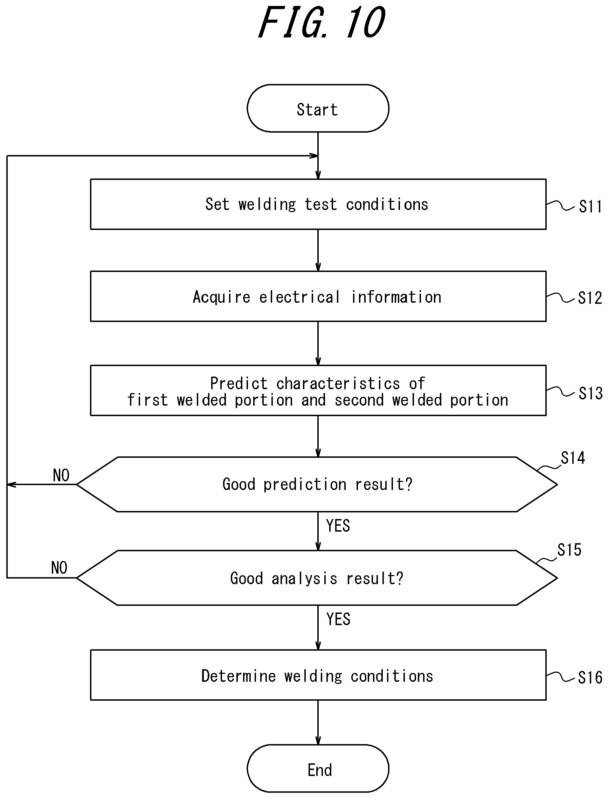

In the prediction system 100 according to the present embodiment, a flowchart including the procedures illustrated in FIG. 10 may be executed to determine welding conditions by a welding test.

Test conditions are set to perform a welding test on a sheet combination subject to determination of the welding conditions for resistance spot welding (step S11). The test conditions may be set by someone such as the person performing the welding test.

The prediction apparatus 20 acquires the electrical information during resistance spot welding performed by the welding apparatus 30 in the welding test from the welding apparatus 30 (step S12). The prediction apparatus 20 predicts the welded portion characteristics of the first welded portion 51 and the second welded portion 52 of the welded joint obtained by the welding test, based on the electrical information during resistance spot welding (step S13). The prediction apparatus 20 may input the electrical information during resistance spot welding to each of the first prediction model 221 and the second prediction model 222 and acquire the prediction result of the characteristics of the first welded portion 51 outputted from the first prediction model 221 and the prediction result of the characteristics of the second welded portion 52 outputted from the second prediction model 222.

It is determined whether the prediction results of the characteristics of each of the first welded portion 51 and the second welded portion 52 by the prediction apparatus 20 are good (step S14). The determination of the prediction results of the characteristics of each of the first welded portion 51 and the second welded portion 52 may be made by someone such as the person performing the welding test, or by an apparatus such as the prediction apparatus 20 or an external apparatus that acquires the prediction results from the prediction apparatus 20. In a case in which the prediction results of the characteristics of each of the first welded portion 51 and the second welded portion 52 are not good (step S14: NO), the process returns to the procedure for setting test conditions in step S11, and the test is repeated.

In a case in which the predicted results of the characteristics of each of the first welded portion 51 and the second welded portion 52 are good (step S14: YES), the welded joint obtained in the test is actually analyzed, and it is determined whether the analysis results are good (step S15). The determination of the analysis results of the characteristics of each of the first welded portion 51 and the second welded portion 52 may be made by someone such as the person performing the welding test, or by an apparatus such as the analysis apparatus 40. In a case in which the analysis results of the characteristics of each of the first welded portion 51 and the second welded portion 52 are not good (step S15: NO), the process returns to the procedure for setting test conditions in step S11, and the test is repeated.

In a case in which the analysis results of the characteristics of each of the first welded portion 51 and the second welded portion 52 are good (step S15: YES), the test conditions when the good characteristics were obtained are determined to be the welding conditions (step S16). The prediction system 100 terminates execution of the flowchart in FIG. 10 after completion of the procedure in step S16.

The prediction apparatus 20 may further perform a step of predicting the characteristics of the welded portion 5 including the first welded portion 51 and the second welded portion 52 based on the prediction result of the characteristics of the first welded portion 51 and the prediction result of the characteristics of the second welded portion 52.

(Summary)

As described above, according to the prediction system 100 of the present disclosure, based on performance data from the electrical information during resistance spot welding when a welding test is performed on a sheet combination for which welding conditions are to be determined, the welded portion characteristics of the welded joint obtained by the welding test are predicted without actually analyzing the welded joint. The ability to predict welded portion characteristics without actual analysis enables an easy increase in the number of welding tests with different welding conditions. This improves the efficiency of selecting welding conditions suitable for the welded portion to have a predetermined nugget diameter or a predetermined strength when the target sheet combination is welded.

In a sheet combination formed by at least a first metal sheet, a second metal sheet, and a third metal sheet in overlap, the characteristics of the first welded portion 51 between the first metal sheet and the second metal sheet and the characteristics of the second welded portion 52 between the second metal sheet and the third metal sheet are predicted by different models. In this way, the prediction accuracy of the welded portion characteristics is improved.

In a case in which the first sheet thickness ratio between the first metal sheet and the second metal sheet and the second sheet thickness ratio between the second metal sheet and the third metal sheet are different, the prediction accuracy of the welded portion characteristics is improved by using different models to predict the characteristics of the first welded portion 51 and the characteristics of the second welded portion 52.

In addition, in a case in which the first sheet thickness ratio is large, the prediction accuracy of the welded portion characteristics is improved by applying a nonlinear model to predict the characteristics of the first welded portion 51.

While embodiments of the present disclosure have been described with reference to the drawings and examples, it should be noted that various modifications and revisions may be implemented by those skilled in the art based on the present disclosure. Accordingly, such modifications and revisions are included within the scope of the present disclosure. For example, functions or the like included in each component, each step, or the like can be rearranged without logical inconsistency, and a plurality of components, steps, or the like can be combined into one or divided. Embodiments according to the present disclosure can also be realized as a program executed by a processor included in an apparatus or as a storage medium having the program recorded thereon. Such embodiments are also to be understood as included in the scope of the present disclosure.

REFERENCE SIGNS LIST

100 Measurement system
3, 4 Electrode
5 Welded portion (51: first welded portion, 52: second welded portion)
6 Upper steel sheet
7 Middle steel sheet
8 Lower steel sheet
10 Prediction model generation apparatus (12: data acquisition interface, 14: database, 16: model generator)
20 Prediction apparatus (22: prediction model, 221: first prediction model, 222: second prediction model)
30 Welding apparatus
40 Analysis apparatus

**Claims**

1. A welded portion characteristic prediction method of predicting characteristics of a welded portion of a sheet combination of three or more overlapping metal sheets including at least a first metal sheet, a second metal sheet, and a third metal sheet, the welded portion being obtained by resistance spot welding to pass a current between two electrodes clamping the sheet combination of three or more overlapping metal sheets, the method comprising:

   acquiring electrical information outputted during resistance spot welding, the electrical information including at least one of the current flowing between the two electrodes, a voltage between the two electrodes, a resistance between the two electrodes, and an amount of heat generated between the two electrodes during the resistance spot welding;
   inputting the electrical information to a first prediction model for predicting characteristics of a first welded portion between the first metal sheet and the second metal sheet and acquiring a prediction result of the characteristics of the first welded portion outputted from the first prediction model; and
   inputting the electrical information to a second prediction model for predicting characteristics of a second welded portion between the second metal sheet and the third metal sheet and acquiring a prediction result of the characteristics of the second welded portion outputted from the second prediction model.

2. The welded portion characteristic prediction method according to claim 1, wherein a sheet thickness ratio obtained by dividing a total sheet thickness of the sheet combination by a sheet thickness of a thinnest metal sheet in the sheet combination is 5 or more, and

   the first metal sheet is thinner than the second metal sheet.

3. The welded portion characteristic prediction method according to claim 2, wherein the first prediction model is a nonlinear model.

4. The welded portion characteristic prediction method according to any one of claims 1 to 3, further comprising generating the first prediction model and the second prediction model by performing learning using the electrical information as learning data.

5. The welded portion characteristic prediction method according to any one of claims 1 to 4, further comprising acquiring a prediction result of at least one of a nugget diameter, a tensile shear strength, a cross tensile strength, and a fracture strength by mechanical peel test of the welded portion as the characteristics of the welded portion.

6. The welded portion characteristic prediction method according to any one of claims 1 to 5, wherein the acquiring of the electrical information includes acquiring a total amount of heat generated from a start of current passage to an end of current passage in resistance spot welding as the electrical information.

7. The welded portion characteristic prediction method according to claim 6, wherein the acquiring of the electrical information includes acquiring a resistance between the two electrodes at the end of current passage as the electrical information.

8. The welded portion characteristic prediction method according to claim 6 or 7, wherein the resistance spot welding includes a first stage of passing a first current and a second stage of passing a second current, and the acquiring of the electrical information outputted during the resistance spot welding includes acquiring an amount of heat generated during the first stage within a period from the start of current passage to the end of current passage as the electrical information.

9. A prediction model generation method of generating a model to predict characteristics of welded portions obtained by resistance spot welding to pass a current between two electrodes clamping three or more overlapping metal sheets including at least a first metal sheet, a second metal sheet, and a third metal sheet, the welded portions including a first welded portion between the first metal sheet and the second metal sheet and a second welded portion between the second metal sheet and the third metal sheet, the method comprising:

acquiring electrical information outputted during resistance spot welding, the electrical information including at least one of the current flowing between the two electrodes, a voltage between the two electrodes, a resistance between the two electrodes, and an amount of heat generated between the two electrodes during the resistance spot welding;

acquiring an analysis result of characteristics of the welded portions when the resistance spot welding is performed;

generating a first prediction model to predict characteristics of the first welded portion and a second prediction model to predict characteristics of the second welded portion by performing machine learning based on learning data associating the electrical information with the analysis result of the characteristics of the welded portions when the resistance spot welding is performed; and

generating a prediction model including the first prediction model and the second prediction model.

10. A prediction model to predict characteristics of a welded portion, the prediction model being generated by the prediction model generation method according to claim 9.

# FIG. 1

# FIG. 2

Analysis apparatus — 40

Welding apparatus — 30

100

Analysis result of elded portion characteristics

Electrical information

Prediction model generation apparatus — 10

12 — Data acquisition interface

14 — Database

16 — Model generator

Generate

Prediction model — 22

Prediction apparatus — 20

Prediction result of welded portion characteristics

EP 4 631 663 A1

EP 4 631 663 A1

# FIG. 3

Electrical information → First prediction model (221) → Prediction result of characteristics of first welded portion

→ Second prediction model (222) → Prediction result of characteristics of second welded portion

Prediction model (22)

Prediction result of welded portion characteristics

# FIG. 4A

Resistance between electrodes

# FIG. 4B

Cumulative amount of heat generated

*FIG. 5*

*FIG. 6*

# FIG. 7

# FIG. 8A

# FIG. 8B

# *FIG. 9*

```
            ┌─────────────┐
            │    Start    │
            └─────────────┘
                   │
                   ▼
┌──────────────────────────────────────────┐
│          Perform welding test            │ ～S1
└──────────────────────────────────────────┘
                   │
                   ▼
┌──────────────────────────────────────────┐
│        Acquire electrical information     │ ～S2
└──────────────────────────────────────────┘
                   │
                   ▼
┌──────────────────────────────────────────┐
│  Acquire analysis result of characteristics of  │ ～S3
│  first welded portion and second welded portion  │
└──────────────────────────────────────────┘
                   │
                   ▼
┌──────────────────────────────────────────┐
│        Generate first prediction model    │ ～S4
│          and second prediction model      │
└──────────────────────────────────────────┘
                   │
                   ▼
            ┌─────────────┐
            │     End     │
            └─────────────┘
```

# FIG. 10

```
                    ┌─────────────┐
                    │    Start    │
                    └──────┬──────┘
                           │
    ┌──────────────────────┤
    │           ┌──────────▼─────────────────────┐
    │           │   Set welding test conditions  │～S11
    │           └──────────┬─────────────────────┘
    │                      │
    │           ┌──────────▼─────────────────────┐
    │           │   Acquire electrical information│～S12
    │           └──────────┬─────────────────────┘
    │                      │
    │           ┌──────────▼─────────────────────┐
    │           │     Predict characteristics of │
    │           │ first welded portion and second│～S13
    │           │         welded portion         │
    │           └──────────┬─────────────────────┘
    │                      │                    S14
    │    NO   ╱────────────▼────────────╲
    ├────────◄   Good prediction result? ╲
    │         ╲─────────────┬───────────╱
    │                       │ YES
    │                       │          S15
    │    NO   ╱─────────────▼───────────╲
    └────────◄    Good analysis result?  ╲
              ╲─────────────┬───────────╱
                            │ YES
                 ┌──────────▼─────────────────────┐
                 │   Determine welding conditions │～S16
                 └──────────┬─────────────────────┘
                            │
                    ┌───────▼─────┐
                    │     End     │
                    └─────────────┘
```

## INTERNATIONAL SEARCH REPORT

| | International application No. |
|---|---|
| | **PCT/JP2024/007157** |

### A. CLASSIFICATION OF SUBJECT MATTER

*B23K 11/24*(2006.01)i; *B23K 11/11*(2006.01)i; *B23K 11/25*(2006.01)i; *B23K 31/00*(2006.01)i
FI:  B23K11/24 335; B23K11/11 540; B23K11/24 315; B23K11/25 510; B23K11/25 511; B23K11/25 512; B23K31/00 Z

According to International Patent Classification (IPC) or to both national classification and IPC

### B. FIELDS SEARCHED

Minimum documentation searched (classification system followed by classification symbols)

B23K11/24; B23K11/11; B23K11/25; B23K31/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | KR 10-2019-0070049 A (KOREA INSTITUTE OF INDUSTRIAL TECHNOLOGY) 20 June 2019 (2019-06-20)<br>    entire text, all drawings | 1-10 |
| A | JP 2020-062655 A (KABUSHIKI KAISHA TOYOTA CHUO KENKYUSHO) 23 April 2020 (2020-04-23)<br>    entire text, all drawings | 1-10 |
| A | JP 2019-171450 A (NIPPON STEEL CORP.) 10 October 2019 (2019-10-10)<br>    entire text, all drawings | 1-10 |
| A | JP 2022-140236 A (NIPPON STEEL CORP.) 26 September 2022 (2022-09-26)<br>    entire text, all drawings | 1-10 |
| A | JP 8-318377 A (SATO, Tsuguhiko) 03 December 1996 (1996-12-03)<br>    entire text, all drawings | 1-10 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 May 2024** | **14 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/007157**

| Patent document cited in search report | | | Publication date (day/month/year) | Patent family member(s) | Publication date (day/month/year) |
|---|---|---|---|---|---|
| KR | 10-2019-0070049 | A | 20 June 2019 | (Family: none) | |
| JP | 2020-062655 | A | 23 April 2020 | US 2020/0114458 A1 entire text, all drawings | |
| JP | 2019-171450 | A | 10 October 2019 | (Family: none) | |
| JP | 2022-140236 | A | 26 September 2022 | (Family: none) | |
| JP | 8-318377 | A | 03 December 1996 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005262259 A